# EUROPÄISCHE PATENTSCHRIFT

(11) **EP 0 487 002 B1**
(45) Veröffentlichungstag und Bekanntmachung des Hinweises auf die Patenterteilung: **05.02.1997**
(21) Anmeldenummer: 91119660.8
(22) Anmeldetag: 18.11.1991
(51) Int. Cl.: B60H 1/32, F25B 41/00

(54) **Vorrichtung zur Klimatisierung des Innenraums von Kraftfahrzeugen**
Device for air-conditioning the passenger compartment of a motor vehicle
Dispositif de climatisation de l'habitacle d'un véhicule automobile

(30) Priorität: 19.11.1990 DE 4036854
(43) Veröffentlichungstag der Anmeldung: 27.05.1992
(73) Patentinhaber: THERMAL-WERKE Wärme-, Kälte-, Klimatechnik GmbH, D-68759 Hockenheim (DE)
(72) Erfinder: Haussmann, Roland, Dipl.-Ing., W-6908 Wiesloch (DE)
(74) Vertreter: Dr. Elisabeth Jung Dr. Jürgen Schirdewahn Dipl.-Ing. Claus Gernhardt

(56) Entgegenhaltungen:
- DE-A- 804 005
- GB-A- N15 182
- GB-A- 1 079 203
- US-A- 1 836 318
- US-A- 1 840 955
- US-A- 4 129 012
- HEATING/PIPING/AIR CONDITIONING Bd. 47, Nr. 8, August 1975, Seiten 56 - 59 LEE 'TWO PHASE BOOSTER EJECTOR FOR AIR CONDITIONING AND REFRIGERATION CYCLES'

## Beschreibung

Die Erfindung bezieht sich auf eine Vorrichtung zur Klimatisierung des Innenraums von Kraftfahrzeugen.

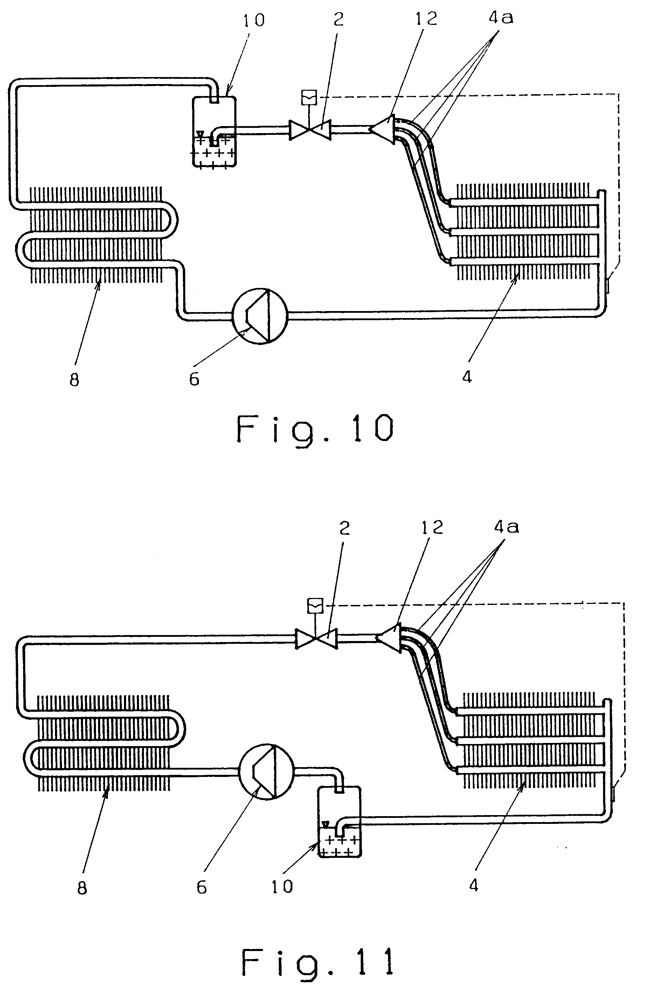

Bisher sind für diesen Zweck auf dem Weltmarkt praktisch nur die beiden Kältekreisläufe realisiert, deren Prinzipschaltung anhand der Fig. 10 und 11 veranschaulicht ist.

Der Kältekreislauf nach Fig. 10 ist beispielsweise in der DE-C1-37 21 388 realisiert. Ein thermostatisches Einspritzventil 2 führt das Kältemittel so geregelt dem Verdampfer 4 zu, daß es stets überhitzt aus dem Verdampfer 4 austritt. Das überhitzte Kältemittel wird von dem Verdichter (auch Kompressor genannt) 6 angesaugt, verdichtet und dann unter höherem Druck dem Verflüssiger (auch Kondensator genannt) 8 zugeführt, in dem es verflüssigt wird. Das verflüssigte Kältemittel wird dann von dem Verflüssiger 8 einem Sammelbehälter 10 zugeführt, welcher als Reserve eine Puffermenge von flüssigem Kältemittel enthält und in dem ein Filtertrockner integriert sein kann. Der Sammelbehälter 10 dient dann im geschlossenen Kreislauf zur Speisung des Einspritzventils 2 mit flüssigem Kältemittel. Infolge der thermostatischen, d.h. temperaturabhängigen, Regelung des Einspritzventils 2 auf optimale Austrittsverhältnisse des Kältemittels am Verdampfer 4 ist dieser bekannte Kreislauf nicht nur für Vollast-, sondern auch gut für Teillastverhältnisse geeignet. Er dominiert in Europa (ca. 70% Marktanteil).

Bei dem Kühlmittelkreislauf gemäß Fig. 11 ist das thermostatische Einspritzventil 2 durch eine Fixdrossel 2a ersetzt, welche gegenüber dem thermostatischen Einspritzventil 2 der Fig. 10 den Vorteil von um etwa eine Zehnerpotenz niedrigeren Kosten hat. Dieser Kältemittelkreislauf ist insbesondere in den Vereinigten Staaten verbreitet; in Anlehnung an den entsprechenden englischsprachigen Begriff der Fixdrossel 2a wird diese auch im deutschen Sprachraum Englisch benannt, nämlich "fix orifice". Eine solche Fixdrossel 2a ist immer nur auf einen bestimmten Lastzustand des Verdampfers 4 auslegbar, meist derart, daß gerade noch Vollast gefahren werden kann. Bei Teillast läßt dann die Fixdrossel 2a noch zu viel Kältemittel durch, welches dann im Verdampfer 4 nicht mehr verdampft wird. Um derartiges unverdampft aus dem Verdampfer 4 austretendes Treibmittel abzufangen, wird bei diesem bekannten Kältemittelkreislauf gemäß Fig. 11 der Sammelbehälter 10 statt wie im Falle von Fig. 10 auf der Hochdruckseite nunmehr nach Fig. 11 auf der Niederdruckseite zwischen dem Ausgang des Verdampfers 4 und dem Eingang des Verdichters 6 angeordnet. Bei dieser Anordnung des Sammelbehälters 10 auf der Niederdruckseite gemäß Fig. 11 ist das Kältemittel nicht so stark verdichtet, so daß der Sammelbehälter bei der Anordnung nach Fig. 11 größer als bei der Anordnung nach Fig. 10 dimensioniert sein muß, wodurch ein Teil der Verbilligung, jedoch nicht die gesamte Verbilligung, der Ersetzung des thermostatisch geregelten Einspritzventils 2 durch die Fixdrossel 2a verbraucht wird. Der Kältemittelkreislauf nach Fig. 11 hat im Verhältnis zu dem der Fig. 10 im Teillastbereich eine etwas geringere Leistung. Bei Auslegung der Kältemittelkreisläufe nach den Fig. 10 und 11 jeweils auf gleiche Leistung würde demnach der Kältemittelkreislauf nach Fig. 11 etwas mehr Antriebsleistung für den Verdichter 6, allgemeiner gesprochen mehr zugeführte Energie und somit praktisch mehr Kraftstoffverbrauch bei mechanisch einfacherem Aufbau benötigen. Dieser Kältemittelkreislauf nach Fig. 11 hat bei in den USA gefertigten Kraftfahrzeugen den gleichen oder gar einen höheren Marktanteil wie der Kältemittelkreislauf nach Fig. 10 in Europa. Ein druckschriftlicher Nachweis des Kältemittelkreislaufes nach Fig. 11 ist für die Anmelderin momentan nicht greifbar.

Bei beiden bekannten Kältemittelkreisläufen der Fig. 10 und 11 steht das Kältemittel vor dem Verdampfer 4 zweiphasig an, d.h. als Gemisch aus flüssiger und gasförmiger Phase. Dies erfordert mechanisch relativ aufwendige Verteileinrichtungen 12 zur gleichmäßigen Aufteilung dieses Phasengemisches ohne Entmischung auf einzelne parallelgeschaltete Kältemittelkreislaufswege 4a im Verdampfer 4. In der Praxis werden dabei zwischen drei und sieben Kältemittelkreislaufwege 4a parallelgeschaltet. Die Verteileinrichtungen sind dabei meist Drehteile mit eingelöteten Zuführungskapillaren. Diese Verteileinrichtungen sind schwierig herzustellen und relativ teuer.

Darüber hinaus erfolgt bei beiden bekannten Kältemittelkreisläufen der Fig. 10 und 11 die Drosselung am Einspritzventil 2 bzw. an der Fixdrossel 2a verlustbehaftet bei konstanter Enthalpie und zunehmender Entropie. Die Entropiezunahme ist dabei durch Verwirbelung des Kältemittels bedingt, ohne daß die an der Drosselungseinrichtung 2 oder 2a auftretende Druckerniedrigung in Nutzleistung umgesetzt wird. Diese geht vielmehr ersatzlos verloren.

Der Erfindung liegt demgegenüber die Aufgabe zugrunde, bei einer Vorrichtung zur Klimatisierung des Innenraums von Kraftfahrzeugen nicht nur für einen einzigen Lastbereich wie im Falle der Fig. 10, sondern für alle in Frage kommenden Lastbereiche ein Drosselungsorgan einfachen mechanischen Aufbaus ohne Regelbedürftigkeit wie im Falle der Fig. 10 verwenden zu können, ohne dabei Leistungsverluste hinnehmen zu müssen, wobei angestrebt wird, durch die neue Auslegung auch die Möglichkeit zu eröffnen, die Verteileinrichtungen 12 mechanisch einfacher aufbauen zu können.

Zur Lösung dieser Aufgabe geht die Erfindung von dem Kältemittelkreislauf nach Fig. 11 aus, bei dem der Sammelbehälter 10 bereits auf der Niederdruckseite angeordnet ist. Die Lösung der der Erfindung zugrundeliegenden Aufgabe ergibt sich aus den kennzeichnenden Merkmalen von Anspruch 1.

Ein Ejektor ist vom baulichen Herstellungsaufwand her nur wenig aufwendiger als die Fixdrossel 2a nach Fig. 10 und deutlich weniger aufwendig als das thermostatisch geregelte Einspritzventil 2 nach Fig. 10. Im Vergleich mit den bekannten Drosselungselementen 2 und 2a der Fig. 10 und 11 erfolgt jedoch nicht mehr eine verlustbehaftete Verwirbelung des Kältemittels, sondern, jedenfalls im Idealfall, eine Entspannung des Kältemittels bei konstanter Entropie, so daß die Enthalpie beim Drosselungsvorgang im Ejektor abnimmt und somit die zur Verfügung stehende Enthalpieaufnahme pro Kilogramm Kältemittel im Verdampfer größer wird.

Durch die Anordnung eines dritten Anschlusses am Sammler 10, durch den das Kältemittel in flüssiger Phase entnommen werden kann, und durch Verbindung dieses zusätzlichen Anschlusses mit dem Eingang des Verdampfers 4 wird nach der Erfindung dem Verdampfer das Kältemittel nur noch in flüssiger Phase zugeführt. Dies erlaubt eine drastische Vereinfachung des mechanischen Aufbaus der Verteileinrichtung 12.

Der erfindungsgemäße Kältemittelkreislauf bewirkt fernerhin, daß bei gleicher Leistung des Verdampfers, d.h. bei gleicher Verdampfungstemperatur und damit gleichem Sättigungsdruck im Verdampfer, der Saugdruck für den Verdichter bei der erfindungsgemäßen Vorrichtung um ca. 0,5 bar höher ist als bei den bekannten Kältemittelkreisläufen der Fig. 10 und 11. Durch diese Druckerhöhung ist auch die Dichte des angesaugten Kältemittels und damit schließlich der Massenstrom im ganzen Kreislauf höher. Daraus folgt eine Leistungssteigerung bei gleicher Energiezuführung bzw. bei gleichen vorgegebenen Leistungsdaten eine Einsparung an zugeführter Energie, speziell an für den Betrieb von Klimakreisläufen verbrauchtem Kraftstoff. Leistungssteigerungen in derselben Richtung ergibt die bereits angesprochene verlustfreie Drosselung im Ejektor, wodurch eine größere Enthalpiedifferenz bzw. größere Wärmeaufnahme je kg umgewalzten Kältemittels im Verdampfer folgt. Bei den üblichen Leistungsdaten beispielsweise bei der Klimatisierung eines PKW ergeben sich je nach der Art des verwendeten Kältemittels Leistungssteigerungen in der Größenordnung von voraussichtlich etwa 20 bis 40%, je nach Verdampfungs- und Verflüssigungsdruck. Entsprechend kann man bei vorgegebener Leistungsanforderung die Energiezufuhr bzw. den Benzinverbrauch senken. Die größere zur Verdampfung zur Verfügung stehende Enthalpiedifferenz und der dadurch bedingte geringere Massenstrom wirken sich auch in Vereinfachung der Herstellung des Verdampfers dadurch aus, daß bei gleichen Leistungsdaten eine geringere Anzahl von Kältemittelkreislaufwegen 4a benötigt wird. Es ist damit zu rechnen, daß man nunmehr mit zwei bis maximal vier derartigen Kältemittelkreislaufwegen auskommt, im Sonderfall sogar mit einem einzigen. Die Erfindung ergibt somit Möglichkeiten, die über die der Aufgabenstellung z.B. hinsichtlich Energieeinsparung noch weit hinausgehen.

Bei den bekannten Kreisläufen der Fig. 10 und 11 bestanden besondere Probleme bei der Klimatisierung des Kraftfahrzeugs bei Leerlauf des Motors, da dann die Drehzahl des Kühlerventilators, der auch zur Belüftung des Verflüssigers 8 genutzt wird, minimal ist. In diesem Fall stellt sich im Verflüssiger 8 bei den beiden bekannten Kreislaufarten ein hoher Verflüssigungsdruck ein, der eine relativ geringe Abkühlung der Temperatur im Innenraum des Kraftfahrzeugs ergibt. Bei der erfindungsgemäßen Vorrichtung ist gerade bei hohem Flüssigkeitsdruck im Verflüssiger 8 die Druckerhöhung am Ausgang des Ejektors besonders hoch, wodurch gerade bei diesem Betriebspunkt die Leistung der Klimaanlage gegenüber den bekannten Verhältnissen der Fig. 10 und 11 maximal gesteigert wird, und zwar um etwa 40 %, d.h. dem oberen Wert des oben angegebenen Leistungsgewinnbereiches.

Für andere Anwendungsfälle als dem der Klimatisierung des Innenraums von Kraftfahrzeugen sind Ejektoren seit langem weit verbreitet, ohne für die erfindungsgemäße Klimatisierung des Innenraums von Kraftfahrzeugen im Sinne der dargelegten Effekte Eingang gefunden zu haben. Zum Beispiel sind Ejektoren bei Strahlkältemaschinen für Wasserdampf oder andere Kältemittel eingesetzt worden.

Ein weiterer von der Anordnung nach den Fig. 10 und 11 abweichender Kältekreislauf, der für die stationäre Klimatechnik vorgesehen ist, ist aus dem Dokument Heating/Piping/Air Conditioning Bd. 47, Nr. 8, August 1975, S. 56 bis 59, bekannt. Mit der erfindungsgemäßen Vorrichtung übereinstimmende Merkmale sind im Kennzeichnungsmerkmal a) von Anspruch 1 zusammengefaßt. Im Gegensatz zum Kältemittelkreislauf nach den Fig. 10 oder 11 wird das aus dem Verflüssiger austretende Kältemittel in einer Treibstrahldüse eines Ejektors auf Überschallgeschwindigkeit beschleunigt und dabei entspannt. Die durch die hohe Strahlgeschwindigkeit bedingte Druckreduzierung im Niederdruckteil des Ejektors wird dazu ausgenutzt, das Kältemittel aus einer Kältemittel/Wasser-Verdampfereinrichtung abzusaugen. Die Geschwindigkeit des aus dem Verdampfer abgesaugten Kältemittels und die Treibstrahlgeschwindigkeit werden im mittleren Teil des Ejektors durch Impunlsausgleich angeglichen. Durch einen ausgangsseitig im Ejektor ausgebildeten Diffusor wird ein Großteil der dynamischen Energie wieder in statischen Druck umgesetzt, so daß der Saugdruck des Verdichters höher als der Druck im Verdampfer ist. In einem dem Ejektor nachgeschalteten Separator wird der Kältemittelstrom in eine flüssige Phase, die dem Verdampfer rückgeleitet wird und in eine gasförmige Phase, die vom Verdichter abgesaugt wird, aufgeteilt.

Die im Ejektor erzielte Druckerhöhung verbessert einerseits die Leistung und den Wirkungsgrad des Verdichters und ermöglicht andererseits die Rückleitung der im Separator abgetrennten flüssigen Phase in den Verdampfer. Die Druckerhöhung im Ejektor dient hierbei zur Überwindung der Strömungsdruckverluste. Ein Kältemittelkreislauf nach dieser an sich für stationäre und insbesondere hochgewichtige Anlagen bekannten Vorrichtung besitzt somit im Vergleich zu den für Kraftfahrzeugklimaanlagen bekannten Kreisläufen gemäß den Fig. 10 und 11 schon den Vorteil, daß ein Teil der beim Drosselvorgang in der Fixdrossel oder im Expansionsventil verlorenen Energie durch den Ejektor in eine Druckerhöhung umgesetzt wird und daß der Verdampfer über den Phasentrenner mit flüssigem einphasigen Kältemittel beaufschlagt wird. Es fehlt jedoch jeder Hinweis auf die Ausbildung eines Ejektors bzw. einer Treibstrahldüse für ein Gas/Flüssigkeitsgemisch, wie es beim Drosseln von flüssigem Kältemittel auftritt. Es ist auch kein separater Sammler vorhanden, sondern das zum Ausgleich von Undichtigkeiten und Dichteunterschieden im Betrieb erforderliche zusätzliche Kältemittel wird im Verdampfer gesammelt. In Kraftfahrzeugklimaanlagen ist aufgrund des geringen Innenvolumens des Verdampfers, der als Luft/Kältemittelwärmeaustauscheinrichtung ausgebildet und im Innenraum angeordnet ist, keine ausreichende Sammelwirkung durch den Verdampfer gegeben, sondern es muß ein zusätzlicher Sammler auf der Saugseite (Fig. 11) oder auf der Druckseite (Fig. 12) eingesetzt werden.

Ejektoren gehören an sich zum ständigen Rüstzeug des Konstrukteurs für Treibmittelpumpen. Als Arbeitsmittel dient ein schnell bewegter Flüssigkeits-, Gas- oder Dampfstrahl hoher Dichte, der durch den Hochdruckeingang des Ejektors in dessen Düse eingeleitet wird. Das Treibmittel vermischt sich mit über den Niederdruckeingang zugeführtem Gas, welches den aus der Ejektordüse austretenden Strahl umhüllt. Dabei gleichen sich die Geschwindigkeiten der beiden aus Hochdruckeingang und Niederdruckeingang in den Ejektor eingeführten Komponenten durch Impulsaustausch aneinander an (siehe z.B. Fachlexikon ABC Physik, Verlag Harry Deutsch, Zürich und Frankfurt am Main, Bd. 1, 1974, S. 338, Stichwort "Ejektorpumpe"). In der Düse des Ejektors wird möglichst verlustfrei Druckenergie in Bewegungsenergie umgesetzt. Dabei kann bei stetiger Verkleinerung des Querschnitts in Strömungsrichtung das strömende Medium bis auf Schallgeschwindigkeit beschleunigt werden. Zur Erzeugung von Überschallgeschwindigkeiten bei Gasströmungen muß der Düsenquerschnitt zunächst verengt und dann erweitert werden. Das ergibt die sogenannte Laval- oder Überschalldüse. In dem am meisten verengten Drosselbereich einer Lavaldüse entsteht dabei wie bei anderen Düsen zunächst Schallgeschwindigkeit. Diese wird durch die Erweiterung der Düse bis in den Überschallbereich bei konstantem Massenstrom erhöht (vgl. z.B. Meyers Lexikon der Technik und der Exakten Naturwissenschaften, Bibliographisches Institut Mannheim, Wien, Zürich, Bd. 1, 1969, S. 669, Stichwort "Düse" und Lueger, Lexikon der Technik, Bd. 1, Grundlagen des Maschinenbaues, Deutsche Verlagsanstalt Stuttgart, 1960, S. 292, Stichwort "Laval-Düse"). Die Verwendung einer Lavaldüse im Ejektor für einphasigen Einlauf des Kältemittels vom Hochdruckeingang des Ejektors bis zum Drosselquerschnitt der Düse wird vorgesehen, um einen möglichst gut gebündelten Treibmittelstrahl möglichst hoher Geschwindigkeit zu erreichen, so daß eine maximale Umsetzung des Druckes in Geschwindigkeitsenergie erfolgt. Bei einer Lavaldüse läßt sich der Austrittswinkel für einphasig eintretendes Treibmittel exakt berechnen. Wenn das Treibmittel bereits im Einlaufkanal vor dem minimalen Drosselquerschnitt zweiphasig wird, wird der Austrittswinkel der Düse hinter dem Drosselquerschnitt mit einem größeren Öffnungswinkel als bei einer Lavaldüse für einphasigen Einlauf ausgebildet. Dadurch erhält man eine Anpassung des Düsenquerschnitts an die abnehmende Dichte des aus dem Drosselquerschnitt austretenden Treibmittelstrahls. Es hat sich gezeigt, daß man Ejektoren für erfindungsgemäße Kreisläufe mit minimalen Drosselquerschnitten ihrer Düse ausbilden kann, die allgemein gleich oder gar etwas größer bemessen sind als Fixdrosseln gemäß den Drosseln 2a der Fig. 11.

Im Rahmen der Erfindung ist schließlich die an sich bekannte Anordnung eines Filtertrockners im Sammler zweckmäßig in Strömungsrichtung vor dessen bisher nicht vorgesehenem Ausgang für die flüssige Phase übernommen. Während bei den bekannten Sammlern, die nur einen Eingang und einen Ausgang haben, eine Anordnung eines Filtertrockners wegen der im Strömungsbereich immer vorhandenen gasförmigen Komponente kritisch ist, läßt sich im Rahmen der Erfindung dieser Filtertrockner sehr bequem im von der flüssigen Phase durchströmten Bereich anordnen. Dadurch erfolgt ein Korrosionsschutz der bei Kältemittelleitungen in Klimaanlagen von Kraftfahrzeugen üblichen Verwendung elastischen Leitungsmaterials.

Die Ansprüche 2 und 3 geben besonders einfache Konstruktionsweisen eines bei der erfindungsgemäßen Vorrichtung verwendbaren Ejektors an.

Wie sich aus den Ansprüchen 4 und 5 ergibt, kann man im Rahmen der Erfindung auf kompliziert ausgebildete Verteileinrichtungen 12 gemäß den Fig. 10 und 11 gänzlich verzichten und diese durch einfache Drosselblenden ersetzen, die im bevorzugten Grenzfall sogar einfach Wandungsbohrungen des eingangsseitigen Sammelrohres (Verteilrohres) des Verdampfers sein können.

Bei der Klimatisierung des Innenraumes von Kraftfahrzeugen besteht ferner das Problem, daß der Verdichter und seine Zuleitung regelmäßig im Motorraum und jedenfalls außerhalb der Fahrgastkabine angeordnet werden, so daß sie der Motorraumtemperatur ausgesetzt sind. Dabei kommt es zu unerwünschter Wärmeaufnahme der kalten Rohrzuleitung zum Verdichter im Motorraum, die zu einer Leistungsminderung der Klimaanlage führt. Es ist bekannt, diesem Effekt dadurch entgegenzuwirken, daß die Zuleitung zum Verdichter in Wärmetausch gebracht wird mit der Austrittsleitung aus dem Verflüssiger. Dadurch wird Wärme von dieser Austrittsleitung auf die Eintrittsleitung des Verdichters übertragen und die Temperatur des vom Verdichter angesaugten Kältemittels so angehoben, daß die Temperaturdifferenz zur Umgebung erniedrigt und damit die Fremdwärmeaufnahme und die dadurch bedingte Leistungsminderung des Kreislaufes verringert wird. Anspruch 6 mit der bevorzugten Weiterbildung nach Anspruch 7 überträgt diesen an sich bekannten Gedanken auf die speziellen Verhältnisse der erfindungsgemäßen Vorrichtung.

Die erfindungsgemäße Vorrichtung ist speziell zur Klimatisierung des Innenraums von Kraftfahrzeugen entwickelt worden. Es wird jedoch nicht ausgeschlossen, daß eine Vorrichtung mit den Erfindungsmerkmalen auch für stationäre Klimatisierungszwecke eingesetzt werden könnte. Bei Kraftfahrzeugen liegen die Verdampfungstemperaturen im Verdampfer etwa in dem Bereich zwischen -10°C und +10°C, bei tieferen Verdampfungstemperaturen, insbesondere etwa bei Verdampfungstemperaturen im Bereich zwischen -30°C und -40°C, kann man noch zu erheblich höheren Wirkungsgradverbesserungen kommen, weil das Verhältnis von Verflüssigungsdruck zu Verdampfungsdruck größer ist. Damit eröffnet sich also auch noch ein zweckmäßiger Nebennutzen bei der Fertigung erfindungsgemäßer Vorrichtungen zum Einsatz bei stationären Klimatisierungsanwendungen, z.B. in Kühlhäusern.

Die Erfindung wird im folgenden anhand schematischer Zeichnungen an zwei Ausführungsbeispielen noch näher erläutert. Es zeigen:
Fig. 1 eine Darstellung des Kältekreislaufs einer erfindungsgemäßen Vorrichtung;
Fig. 2 ein Zustandsdiagramm der Kältemittelzustände im Diagramm lg p als Ordinate und der Enthalpie h als Abszisse;
Fig. 3 einen axialen Längsschnitt durch einen in der erfindungsgemäßen Vorrichtung eingesetzen Ejektor;
Fig. 4 ein Schaubild des Kältemitteldruckverlaufs längs des Strömungskanals des Ejektors;
Fig. 5 einen vergrößerten Teilschnitt des Einlaufbereiches des Verdampfers mit vereinfachter Kältemittelverteilung;
Fig. 6 einen Längsschnitt durch den Ejektor analog dem der Fig. 3 zur Veranschaulichung einer besonders einfachen Herstellungsmöglichkeit des Ejektors nach Fig. 3;
Fig. 7 eine Darstellung analog Fig. 1 mit zusätzlichem inneren Wärmetausch zwischen der Ausgangsleitung des Verflüssigers und der Eingangsleitung des Verdichters;
Fig. 7a einen Querschnitt durch eine Baueinheit, welche insbesondere den inneren Wärmetausch gemäß Fig. 7 baulich mit dem nach Fig. 1 bzw. 7 vorhandenen Sammler 10 und dem Ejektor 20 in kompakter Bauweise kombiniert;
Fig. 8 ein Zustandsdiagramm analog dem der Fig. 2 in Anwendung auf den Kreislauf nach Fig. 7 statt auf Fig. 1;
Fig. 9 ein Diagramm zur Veranschaulichung der Leistungssteigerung in Abhängigkeit vom Druckverhältnis zwischen Verflüssigungs- und Verdampfungsdruck, bezogen auf den Eintritt des Verflüssigers und den Austritt des Verdampfers, im Vergleich mit der gattungsgemäßen bekannten Vorrichtung nach Fig. 11 und der diesbezüglich wenig andersartigen Vorrichtung nach Fig. 10;
und die Fig. 10 und 11 bekannte, eingangs bereits gewürdigte Kältemittelkreisläufe bei den beiden üblichen Vorrichtungen für die Klimatisierung des Innenraums von Kraftfahrzeugen.

Soweit bei der erfindungsgemäßen Vorrichtung vergleichbare Bauteile wie bei den bekannten Vorrichtungen der Fig. 10 und 11 verwendet werden, sind dieselben Bezugszeichen benutzt.

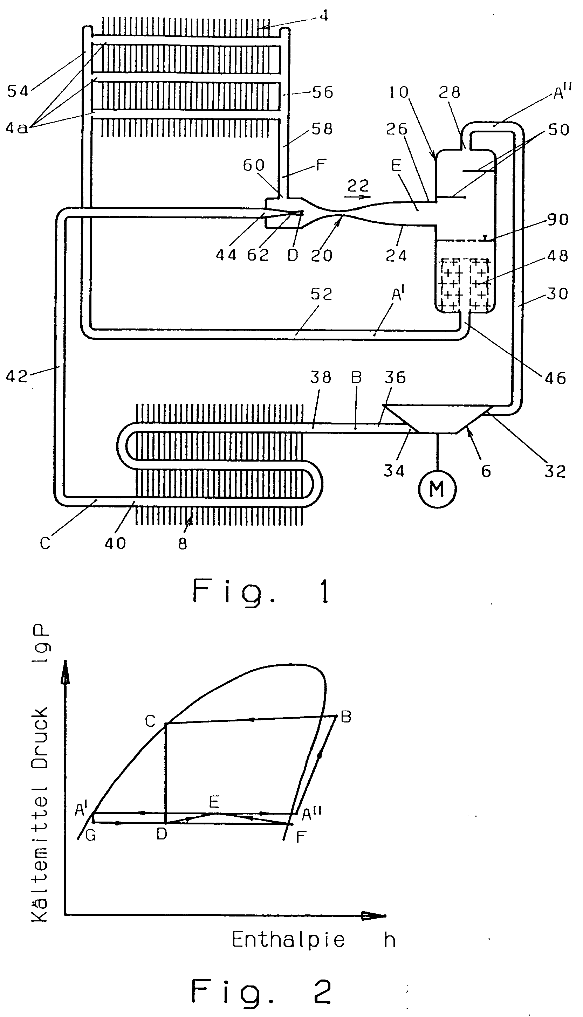

Bei der Vorrichtung gemäß Fig. 1 ersetzt der Ejektor 20 die Fixdrossel 2a in Fig. 11. Das aus dem Ejektor 20 in Richtung des den Kreismittelumlauf angebenden Pfeiles 22 durch den Ausgang 24 des Ejektors 20 austretende Kältemittel wird in den Sammler 10 durch dessen Eingang 26 zugeführt, und zwar in einem Bereich des Sammelbehälters 10, in welchem stets mindestens ein Anteil gasförmiger Phase herrscht. Es ist dabei möglich, in der dargestellten Weise den Ausgang 24 des Ejektors 20 und den Eingang 26 des Sammelbehälters 10 unmittelbar aneinander anzuschließen, ja in einer gemeinsamen Baueinheit aufzubauen. Man kann aber auch ein Leitungszwischenstück vorsehen, das jedoch zweckmäßig relativ kurz gewählt wird. Der Ausgang 28 für die gasförmige Phase des Sammelbehälters 10 ist über eine Verbindungsleitung 30 an den Eingang 32 des Verdichters 6 angeschlossen, der einen Antrieb von dem Fahrzeugmotor M hat. Die Verbindungsleitung 30 ist meist als Schlauchleitung ausgelegt. Das gleich gilt für eine Verbindungsleitung 36, mit der der Ausgang 34 des Verdichters 6 mit dem Eingang 38 des Verflüssigers 8 verbunden ist. Dessen Ausgang 40 ist über eine Verbindungsleitung 42, z.B. aus Aluminium oder einer Aluminiumlegierung, an den Hochdruckeingang 44 des Ejektors 20 angeschlossen.

Der Sammelbehälter 10 ist mit einem zusätzlichen Ausgang 46 für die flüssige Phase des Kältemittels versehen, das in flüssiger Phase im unteren Bereich des Sammelbehälters gesammelt wird. Während diese Sammlung bei den bekannten Anordnungen der Fig. 10 und 11 nur einen nicht weitergeführten Zwischenpuffer darstellt, ist er hier in den Strömungskreislauf durch den Ausgang 46 des Sammelbehälters 10 einbezogen. Der untere Bereich des Sammelbehälters 10, in welchem sich die flüssige Phase sammelt, ist dabei auch der geborene Aufnahmeraum für eine Anordnung mit einer oder mehreren Filtertrocknerpatronen 48. Oberhalb des Eingangs 26 in den Sammelbehälter 10 sind ferner von den beiden gegenüberliegenden aufrechten Wänden her gegeneinander verschachtelt gerichtete Schikanen 50 angeordnet, an denen sich noch im gasförmigen Strom mitgerissene Flüssigkeitsteilchen zum Abtropfen abscheiden können.

Der Ausgang 46 des Sammelbehälters 10 ist über eine starre oder schlauchartige Verbindungsleitung 52 mit einem Eingangssammler 54 des Verdampfers 4 verbunden, der hier mit drei parallelgeschalteten Kältekreislaufwegen 4a ausgebildet ist. In praxi kommen hierbei ein bis vier derartige Wege in Frage. Die Kältekreislaufwege münden ausgangsseitig in einen Ausgangssammler 56, der über eine Verbindungsleitung 58 an den Niederdruckeingang 60 des Ejektors 20 angeschlossen ist.

In den Kältemittelkreislauf nach Fig. 1 sind ferner Bezugsorte A bis F eingetragen, welche den Zustandspunkten des weiter hinten noch beschriebenen Zustandsdiagramms nach Fig. 2 korrespondieren.

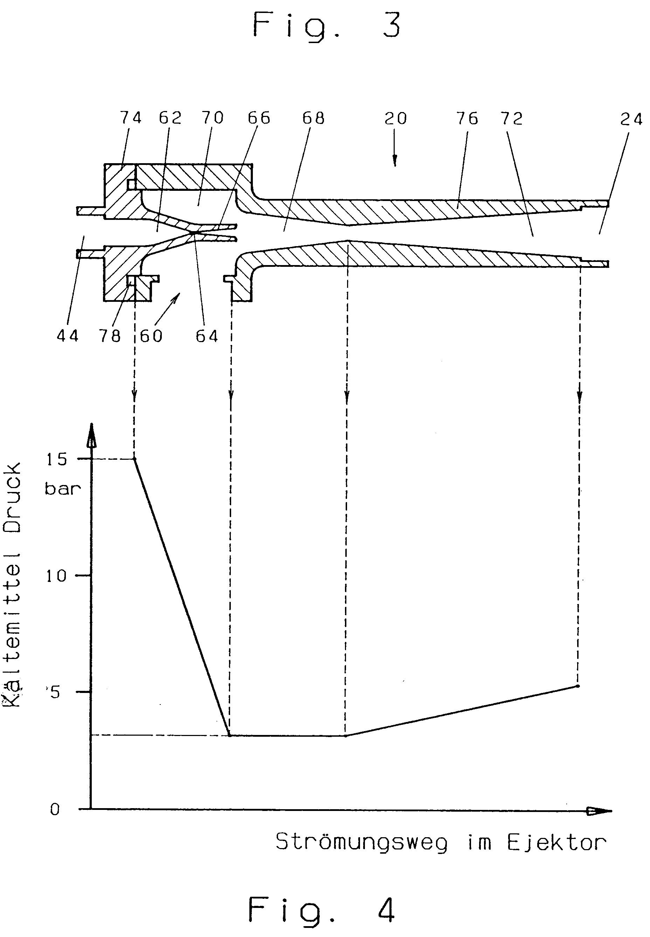

Anhand von Fig. 3 wird eine mögliche Ausführungsform des Ejektors auch zur Veranschaulichung von dessen wesentlichen Bauelementen beschrieben.

Der Hochdruckeingang 44 des Ejektors 20 ist mit einer Abstufung als Lötanschluß für die Zuleitung 42 ausgebildet. Vom Hochdruckausgang 44 aus verengt sich der axial gerade Strömungsquerschnitt in Form einer Einlaufdüse 62 bis zu einem minimalen Drosselquerschnitt 64, dessen lichte Weite gleich oder etwas größer wie die Drosselbohrung der Fixdrossel 2a in Fig. 10 ist. Von dem minimalen Drosselquerschnitt aus verlängert sich der Düsenkanal als (erster) Diffusor 66, aus dem ein Treibmittelstrahl des in den Hochdruckeingang 44 eingetretenen Treibmittels frei axial durch die Mischkammer 68 strömt.

Seitlich zu der Düse 62, 64, 66 ist im Ejektor 20 der Niederdruckeingang angeordnet, der an einen die Anordnung der Düse umschließenden Ringraum 70 angeschlossen ist. Von diesem aus tritt das in den Niederdruckeingang 60 geführte gasförmige Kältemittel als Hüllströmung um die aus dem Diffusor 66 austretende Kernströmung in die Mischkammer 68 ein, wo eine Vermischung unter Impulsangleichung ohne Verwirbelung erfolgt. Wiederum axial fluchtend mit den übrigen Elementen 44, 62, 64, 66 und 68 schließt sich an die Mischkammer 68 ein zweiter Diffusor 72 an, dessen Ausgang 24 ähnlich wie der Hochdruckeingang 44 als Lötanschluß ausgebildet ist. Die relativen Größenverhältnisse sind dabei etwa maßstäblich so wie in Fig. 3 angegeben.

Auch der Niederdruckeingang 60 ist als Lötanschluß ausgebildet.

Für den vorzugsweise vorgesehenen überkritischen Betrieb der Düse ist dessen Diffusor 66 in Ausbildung der ganzen Düse als Lavaldüse ausgelegt, was bedeutet, daß insbesondere der Öffnungswinkel des Diffusors 66 bestimmt ist. Diese Ausführungsform ist für den Fall bestimmt, daß in Strömungsrichtung vor der Drosselblende 64 ausschließlich Kühlmittel in flüssiger Phase ansteht. Wenn jedoch das anstehende Kühlmittel, das über den Hochdruckeingang 44 zugeführt wird, innerhalb der Einlaufdüse 62 vor dem Drosselquerschnitt 64 gasförmige Komponente entstehen läßt, wird der Öffnungswinkel des Diffusors 66 weiter als bei einer Lavaldüse gewählt.

In Fig. 4 ist maßstäblich über die Längenerstreckung des Ejektors 20 ein Schaubild gebildet, dessen Abszisse dem axialen Strömungsweg im Ejektor maßstäblich entspricht und auf dessen Ordinate der Kältemitteldruck im Ejektor 20 aufgetragen ist. Die vertikalen gestrichelten Linien sind lediglich gedachte Zuordnungslinien zu den entsprechenden Orten des Ejektors 20 in Fig. 3. Der Druckverlauf in Fig. 4 entspricht dabei dem Druckverlauf des durch den Hochdruckeingang 44 dem Ejektor 20 zugeführten Kältemittels, welches in der Düse 62, 64, 66 entspannt wird. Der Druckverlauf von seiten des Niederdruckeingangs 60 ist strichpunktiert dargestellt. Man erkennt, daß hier kein Druckverlust auftritt, sondern eine horizontale Einleitung in den Druckverlauf in Strömungsrichtung hinter dem Diffusor 66. Man erkennt, daß im Bereich des Diffusors 72 eine deutliche Druckerhöhung gegenüber dem Druck am Niederdruckeingang 60 bzw. in der Mischkammer 68 eintritt, welcher der erfindinngsgemäßen Nutzbarmachung des Druckabfalls im Ejektor 20 entspricht, der bei der Fixdrossel 2a oder dem thermostatischen Einspritzventil 2 nach Fig. 10 verloren geht.

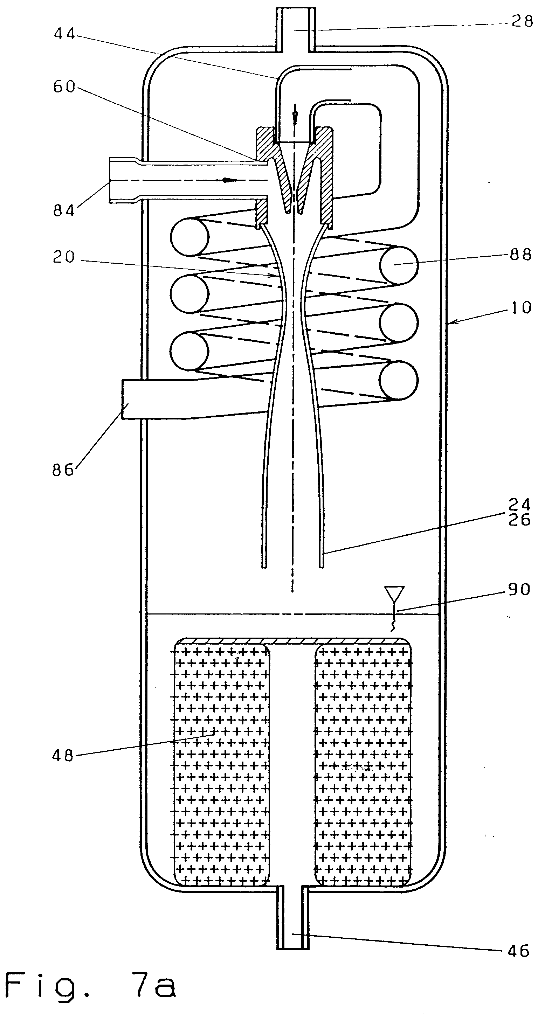

Bereits in Fig. 3 ist erkennbar, daß man den Ejektor einfach aus zwei Bauteilen 74 und 76 zusammensetzen kann, die gegeneinander durch eine O-Ringdichtung 78 abgedichtet sind. Während bei der Ausführungsform nach Fig. 3 beide Bauteile 74 und 76 spanabhebend bearbeitete Bauteile sind, gilt dies bei der Variante nach Fig. 6 nur noch für den ersten Bauteil 74, während der zweite Bauteil 76 einfach Teil der fortlaufenden Rohrführung ist, die als der zweite Diffusor 72 spanlos umgeformt ist, z.B. durch Rollieren, Pressen, Drücken usw.

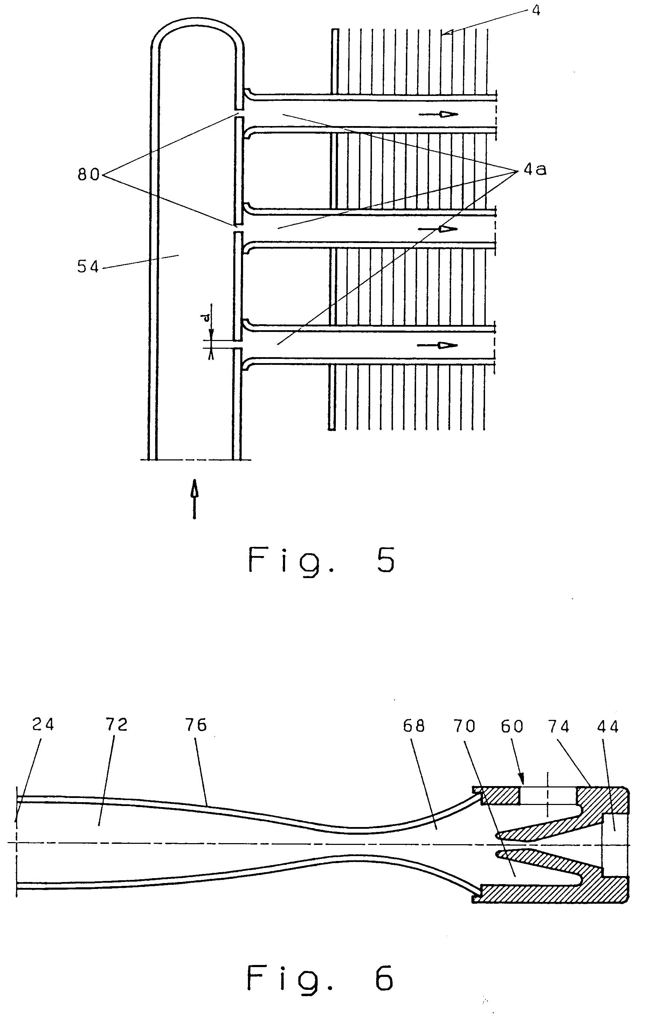

Fig. 5 zeigt, wie besonders einfach die Verteilung des Kältemittels von dem Eingangssammler 54 des Verdampfers 4, welcher als dessen Eingang dient, auf die einzelnen (hier drei) Kältemittelkreislaufwege 4a erfolgen kann, nämlich einfach durch als Lochblenden wirkende Wandungsbohrungen 80 mit dem Durchmesser d in der Wandung des Eingangssammlers 54.

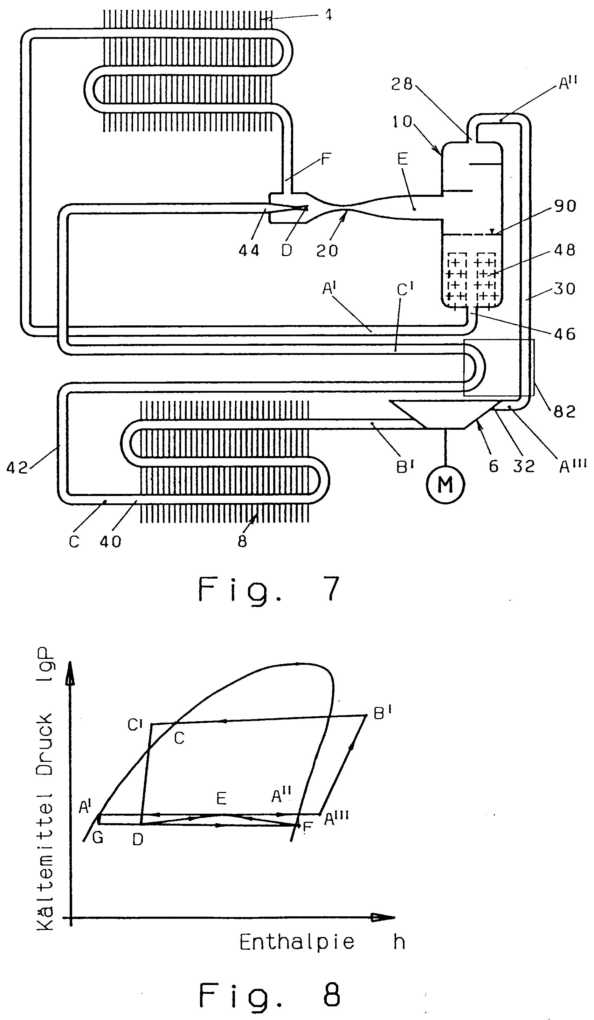

Fig. 7 zeigt als zweite Ausführungsform eine Variante des Kühlmittelkreislaufs gemäß Fig. 1, bei der alle zur Vereinfachung nachfolgend nicht nochmals beschriebenen Elemente denen der Fig. 1 entsprechen. Die Besonderheit besteht dabei in folgendem:

Die Verbindungsleitung 42 vom Ausgang 40 des Verflüssigers 8 zum Hochdruckeingang 44 des Ejektors 20 ist hier in die Nachbarschaft der Verbindungsleitung 30 zwischen dem Ausgang 28 für die gasförmige Phase des Sammlers 10 mit dem Eingang 32 des Verdichters 6 geführt, wobei die beiden Verbindungsleitungen 42 und 30 als die beiden Strömungswege eines zusätzlichen Wärmetauschers 82 in diesem inkorporiert sind. Dadurch erfolgt eine Aufwärmung der Verbindungsleitung 30 aus der Verbindungsleitung 42 mit der früher beschriebenen Auswirkung.

Das Gehäuse des Sammelbehälters 10 weist hier wie im Falle der Fig. 1 bzw. der Fig. 7 zunächst an oberer und unterer Stirnseite den Ausgang 28 für gasförmige Phase und den Ausgang 46 für flüssige Phase auf. Der Ausgang des Ejektors ist jedoch nicht mehr durch eine gesonderte Anschlußverbindung mit einem eigenen Eingang des Sammelbehälters 10 in dessen Raum für die gasförmige Phase verbunden, sondern diese Anschlußverbindung ist indirekt verwirklicht. Der Ejektor 20 ist nämlich axial unterhalb des Ausgangs 28 für die gasförmige Phase in deren Aufnahmeraum innerhalb des Sammelbehälters 10 so aufgenommen, daß der Ausgang 24 des Ejektors zugleich den Eingang 26 des Sammelbehälters 10 bildet.

Der gesonderte materielle Eingang 26 des Sammelbehälters 10 nach den Fig. 1 und 7 ist hier virtuell aufgeteilt auf zwei Eingänge 84 und 86, so daß der Sammelbehälter im ganzen vier Wandungsanschlüsse 28, 46, 84 und 86 besitzt. Der Wandungsanschluß 84 ist als Lötverbindung ausgebildet und dient zum Anschluß der Verbindungsleitung 58, die gemäß Fig. 1 vom Ausgangssammler 56 des Verdampfers 4 zum Niederdruckeingang 60 des Ejektors 20 führt, jedoch nunmehr anders als in den Fig. 1 und 7 nicht außerhalb, sondern innerhalb des Sammelbehälters 10 endend.

Der Eingang 86, der auch wieder als Lötverbindung ausgebildet sein kann, ist an die Leitung 42 angeschlossen, die sich hier in den von der gasförmigen Phase des Sammelraumes eingenommenen Innenraum des Sammelraumes weiter erstreckt und dabei in eine Rohrschlange 88 übergeht, die als glattes oder verripptes Wärmetauschrohr dient und den Ejektor 20 umgibt. Die Rohrschlange 88 führt dabei vom Eingang 86 zum Hochdruckeingang 44 des Ejektors 20. Die Rohrschlange 88 hat dabei in dieser Anordnung den gleichen Effekt wie der innere Wärmetauscher 82 gemäß Fig. 7.

Durch die Aufheizung des Innenraums des Sammelbehälters 10 im Bereich von dessen gasförmiger Phase mittels der Rohrschlange 80 erfolgt dabei eine Zusatzheizung dieses die gasförmige Phase aufnehmenden Innenraums des Sammlers, die auch ohne die Schikanen 50 gemäß Fig. 1 für eine vollständige Abscheidung von Flüssigkeitstropfen sorgen kann, wodurch eine weitere Aufwandsvereinfachung erreicht wird.

Sowohl in Fig. 1 als auch in Fig. 7 und in Fig. 7a ist der Flüssigkeitspegel im Sammelbehälter 10, der dessen unteren, von Flüssigkeit eingenommenen Raum von dessen oberem, weitgehend von gasförmiger Phase eingenommenen Raum trennt, mit 90 bezeichnet.

In Fig. 7 sind ebenso wie in Fig. 1 Kennbuchstaben zusätzlich eingeführt, welche eine räumliche Zuordnung von Betriebsphasen des auf Fig. 7 bezogenen Diagramms nach Fig. 8 darstellen. Fig. 8 wird ebenso wie Fig. 2 später diskutiert.

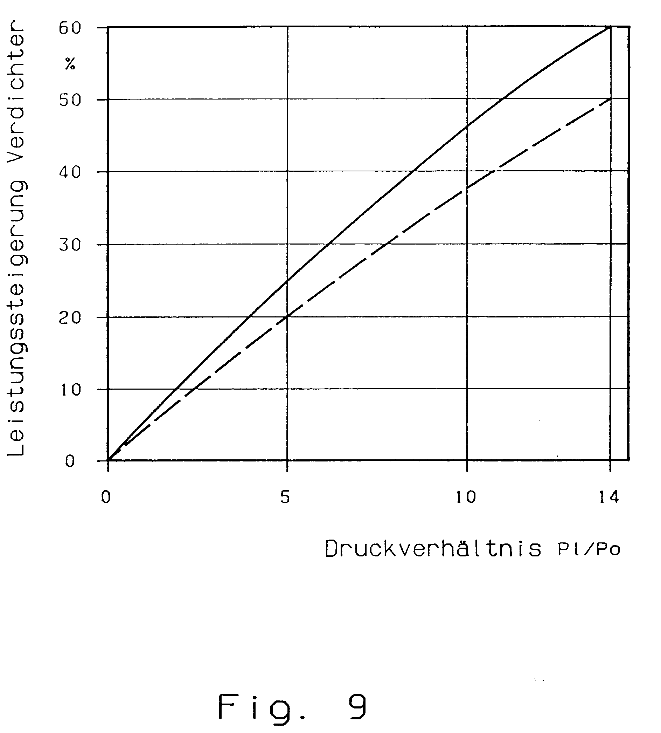

In dem Diagramm nach Fig. 9 ist als Abszisse das Druckverhältnis p_{C}/p_{O} aufgetragen, wobei p_{C} den Druck im Eingang des Verflüssigers 8 und p_{O} den Druck am Ausgang des Verdampfers 4 angibt. Die nach der Erfindung mit den Kreisläufen der Erfindung nach den Fig. 1 oder 7 erreichbaren Leistungssteigerungen am Verdichter 6 sind hier in Prozenten für verschiedene konventionelle Kältemittel angegeben. Dabei sind die ausgezogene Kurve auf das Kältemittel R 12 oder das Kältemittel R 134a und die gestrichelte Kurve auf das Kältemittel R 22 bezogen. Das Kältemittel R 12 ist dabei ein derzeit aus Umweltgründen auslaufendes Kältemittel auf Basis eines Fluorchlorkohlenwasserstoffes, kurz FCKW, das derzeit durch das weniger umweltschädliche Kältemittel R 134a auf Basis eines Wasserstofffluorkohlenwasserstoffes HFKW ersetzt wird. Das Kältemittel R 22 auf Basis eines Wasserstoffchlorfluorkohlenwasserstoffes, kurz HCFKW, ist noch bis zur Jahrtausendwende zugelassen und wird dann voraussichtlich auch durch einen Ersatzstoff ersetzt werden. Die Bezeichnungen dieser Sicherheitskältemittel entsprechen der internationalen Üblichkeit.

Allgemein ist es zweckmäßig, daß die Mischkammer 68 des Ejektors 20 zugleich bereits den Einlaufkonus des zweiten Diffusors 72 bildet und dabei als Fangdüse für den aus dem ersten Diffusor 66 austretenden Kernstrahl dient, der vom Hochdruckeingang 44 des Ejektors 20 herkommt.

In Fig. 2 sind die Kältemittelzustände vor bzw. nach den in Fig. 1 dargestellten Kreislaufkomponenten Verdampfer 4, Verflüssiger 8, Verdichter 6, Ejektor 20, Sammelbehälter 10 im Mollier-hlgp-Diagramm mit der Enthalpie h als Abszisse und dem Kältemitteldruck p in logaritbmischer Darstellung als Ordinate dargestellt. Die Druckbuchstaben für die einzelnen Zustandspunkte der Fig. 2 korrelieren mit den ebenfalls in Fig. 1 eingezeichneten Druckbuchstaben.

Der Verdichter 6 saugt das gesättigte Gas mit Zustand A'' aus dem Sammelbehälter 10 ab und verdichtet dieses auf den Verflüssigungsdruck mit Zustandspunkt B. Im Verflüssiger 8 wird das Kältemittel unter Druckabfall sowie Enthalpieabnahme verflüssigt und tritt mit einer geringen Unterkühlung von 1-10 K aus dem Verflüssiger mit dem Zustand C aus. In der Einlaufdüse 62 erfolgt die Drosselung des Kältemittels vom Zustandspunkt C auf den Verdampfungsdruck gemäß Zustandspunkt D bei gleichzeitiger Erhöhung der dynamischen Energie. In der Mischkammer 68 wird nun gasförmiges Kältemittel mit Zustand F aus dem Verdampfer 4 abgesaugt und mit dem Flüssigkeitsstrahl aus dem ersten Diffusor 66 unter Impulsaustausch gemischt. Im nachfolgenden zweiten Diffusor 72 wird nun die Geschwindigkeitsenergie zum größten Teil wieder in eine statische Druckerhöhung umgesetzt, so daß am Ende des zweiten Diffusors 72 der gemeinsame Zustand E mit einem um ca. 0,5 bar höheren Druck als im Verdampfer 4 erreicht wird. Im Sammelbehälter 10 erfolgt nun eine Phasentrennung bei konstantem Druck in eine gasförmige Phase A'', die wie schon geschildert von dem Verdichter 6 abgesaugt wird, und in eine flüssige Phase A', die über einen Filtertrockner 48 dem Eingangssammler 54 des Verdampfers 4 zugeführt und dort durch die Wandungsbohrungen 80 vom Zustand A' auf den Zustand G gedrosselt wird. Dieser zusätzliche Druckverlust zwischen den Zustandspunkten A' und G dient zur gleichmäßigen Verteilung des flüssigen Kältemittels in die einzelnen Kältekreislaufwege 4a.

Aus Fig.2 ist ebenfalls ersichtlich, daß die Drosselung im Ejektor 20 entlang der Isentropen mit abnehmender Enthalpie verläuft, so daß gegenüber einerisenthalpen Drosselung mit vertikalem Verlauf eine größere Enthalpiedifferenz im Verdampfer entsteht (Enthalpie im Zustandspunkt F - Enthalpie im Zustandspunkt D). Dies ergibt zusammen mit der vom Ejektor 20 bewirkten Dichtezunahme vom Zustandspunkt F auf den Zustandspunkt A'' die in Fig. 9 dargestellte Leistungssteigerung.

In Fig. 8 sind analog zu Fig. 2 die Kältemittelzustandspunkte der Fig. 7 in das schon beschriebene Mollier-hlgp Diagramm eingezeichnet. Die mit großen Druckbuchstaben gekennzeichneten Zustandspunkte gelten für die in Fig. 7 eingezeichnete Stelle im Kältekreislauf mit gleichen Buchstaben.

Bis auf die Zustandsänderungen im zusätzlichen inneren Wärmetauscher 82 ist der Kältemittelkreislauf unverändert von Fig. 2 übernommen, so daß lediglich die Änderungen der Zustände im inneren Wärmetauscher 82 beschrieben werden. Das Kältemittel tritt als gesättigter Dampf mit Zustand A'' aus dem Sammelbehälter 10 aus und wird im inneren Wärmeaustauscher 82 in Wärmeaustausch mit der Verbindungsleitung 42 zwischen Verflüssiger 8 und Ejektor 20 gebracht. Daraus resultiert eine Temperatur- und Enthalpiezunahme bei konstantem Druck auf den Zustandspunkt A'''. Durch den stark überhitzten Zustand wird gewährleistet, daß sich keine Flüssigkeitströpfchen mehr im gasförmigen Kältemittel befinden, die in der Verbindungsleitung 30 zwischen dem Sammelbehälter 10 und dem Verdichter 6 sowie im Verdichter 6 selbst unter Aufnahme von Umgebungswärme aus dem Motorraum verdampfen und somit den Kältemittelkreislauf unnötig belasten. Durch die höhere Temperatur sowie Enthalpie des vom Verdichter 6 angesaugten Kältemittels verschiebt sich auch der Zustandspunkt B' nach dem Verdichter 6 bei gleichem Druck ebenfalls auf höhere Endverdichtungstempraturen sowie höhere Enthalpie. Aus diesem Grund darf der innere Wärmeaustauscher 82 in der Leistung nicht so hoch dimensioniert werden, daß unzulässig hohe Endverdichtungstemperaturen entstehen.

Im Verflüssiger 8 wird nun das Kältemittel wie schon in Fig. 2 auf den Zustandspunkt C verflüssigt und durch den Wärmeaustausch im inneren Wärmeaustauscher 82 weiter auf den Zustandspunkt C' bei konstantem Druck unterkühlt.

Die weitere Funktion des Kältekreislaufs nach Zustandspunkt C' entspricht in vollem Umfang Fig. 2.

## Patentansprüche

1. Vorrichtung zur Klimatisierung des Innenraums von Kraftfahrzeugen mit einem aus einem Niederdruckteil und einem Hochdruckteil bestehenden Kältemittelkreislauf, bei dem Kältemittel in dampfförmiger Phase aus einem Verdampfer (4) über einen als Phasentrenner zwischen flüssiger und gasförmiger Phase wirkenden Sammelbehälter (10) durch einen Ausgang (28) für die gasförmige Phase von einem Verdichter (6) abgezogen und unter Druckerhöhung einem Verflüssiger (8) zur Abkühlung und Verflüssigung zugeführt wird und bei dem aus dem Verflüssiger (8) in flüssiger Phase austretendes Kältemittel über ein Drosselelelement (20) unter Druckabfall und Abkühlung in den Verdampfer (4) rückleitbar ist,
**gekennzeichnet** durch die Kombination folgender Merkmale:
a) das Drosselelement ist als Ejektor (20) ausgebildet, dessen Hochdruckeingang (44) an den Ausgang (40) des Verflüssigers (8) und dessen Niederdruckeingang (60) an den Ausgang (56) des Verdampfers (4) angeschlossen sind;
b) der Ausgang (24) des Ejektors (20) ist an den Eingang (26) des Sammelbehälters (10) angeschlossen oder bildet diesen, wobei der Sammelbehälter (10) mit einem Ausgang (46) für die flüssige Phase versehen ist, der an den Eingang (54) des Verdampfers (4) angeschlossen ist;
c) für einphasigen Einlauf des Kältemittels vom Hochdruckeingang (44) des Ejektors (20) bis zum Drosselquerschnitt (64) der Düse ist diese als Lavaldüse ausgebildet, während für Einlaufverhältnisse des Kältemittels zwischen dem Hochdruckeingang (44) des Ejektors (20) und dem Drosselquerschnitt (64) der Düse, bei denen in Strömungsrichtung (22) vor dem Drosselquerschnitt (64) sich ein Anteil des Kältemittels bereits in die Gasphase wandelt, der Austrittswinkel der Düse hinter dem Drosselquerschnitt (64) einen größeren Öffnungswinkel als bei einer Lavaldüse besitzt;
d) im Sammler (10) ist in Strömungsrichtung vor dessen Ausgang (46) für die flüssige Phase ein Filtertrockner (48) angeordnet.

2. Vorrichtung nach Anspruch 1, dadurch gekennzeichnet, daß der Ejektor (20) zweiteilig ausgebildet ist, wobei das eine Teil (74) seine Düse bildet und das zweite Teil (76) unter Bildung der Mischkammer (68) und des (zweiten) Diffusors (72) ein verformtes Rohrstück ist.

3. Vorrichtung nach Anspruch 2, dadurch gekennzeichnet, daß das die Düse enthaltende Teil (74) ein nachbearbeitetes Dreh- oder Gußstück ist.

4. Vorrichtung nach Anspruch 1 oder 2, bei der mehrere Kältekreislaufwege (4a) des Verdampfers (4) vorgesehen sind, dadurch gekennzeichnet, daß ein Eingangssammler (54) für den Verdampfer (4) vorgesehen ist, der über Drosselblenden (80) mit den Kältekreislaufwegen (4a) kommunizierend verbunden ist.

5. Vorrichtung nach Anspruch 4, dadurch gekennzeichnet, daß die Drosselblenden (80) als Wandungsbohrungen des Eingangssammlers (54) ausgebildet sind.

6. Vorrichtung nach einem der Ansprüche 1 bis 5, dadurch gekennzeichnet, daß die Verbindungsleitung zwischen dem Ausgang für die gasförmige Phase des Sammlers und dem Eingang des Verdichters einerseits und die Verbindungsleitung zwischen dem Ausgang des Verflüssigers und dem Hochdruckeingang des Ejektors (20) über eine Wärmetauschereinrichtung in Wärmetausch stehen.

7. Vorrichtung nach Anspruch 6, dadurch gekennzeichnet, daß der Ejektor (20) innerhalb des Aufnahmeraums für die gasförmige Phase des Kältemittels im Sammler angeordnet ist, der Ausgang des Ejektors (20) dabei direkt als zugeordneter Eingang (26) in den Sammelraum dient und der Ejektor von einem Abschnitt der zwischen dem Verflüssiger (8) und dem Hochdruckeingang (44) des Ejektors verlaufenden Verbindungsleitung (42) wärmetauschend mit der gasförmigen Phase des Kältemittels umgeben ist, wobei in der Sammlerwandung außer den Ausgängen (48,46) Eingänge (84,86) für die Anschlüsse des Verdampferausgangs (56) an den Niederdruckeingang (60) des Ejektors (20) und des Hochdruckeingangs (44) des Ejektors an den Ausgang (40) des Verflüssigers ausgebildet sind.

## Claims

1. A device for air-conditioning the interior space of motor vehicles, having a refrigerant circuit consisting of a low-pressure part and a high-pressure part, wherein refrigerant is drawn off in the vapour phase by a compressor (6) from an evaporator (4) via a collecting vessel (10) which acts as a phase separator between the liquid and gaseous phase, through an outlet (28) for the gaseous phase, and is fed with an increase of pressure to a liquefier (8) for cooling and liquefaction, and wherein refrigerant emerging in the liquid phase from the liquefier (8) can be recycled to the evaporator (4) via a throttle element (20), with a decrease in pressure and with cooling,
characterised by the combination of the following features:
a) the throttle element is constructed as an ejector (20), the high-pressure inlet (44) of which is connected to the outlet (40) of the liquefier (8) and the low-pressure inlet (60) of which is connected to the outlet (56) of the evaporator (4);
b) the outlet (24) of the ejector (20) is connected to the inlet (26) of the collecting vessel (10) or forms the latter, wherein the collecting vessel (10) is provided with an outlet (46) for the liquid phase which is connected to the inlet (54) of the evaporator (4);
c) for single-phase inflow of the refrigerant from the high-pressure inlet (44) of the ejector (20) as far as the throttle cross-section (64) of the nozzle, the latter is constructed as a Laval nozzle, whilst for inflow conditions of the refrigerant between the high-pressure inlet (44) of the ejector (20) and the throttle cross-section of the nozzle in which a proportion of the refrigerant already transforms into the gas phase in front of the throttle cross-section (64) in the direction of flow (22), the angle of emergence of the nozzle behind the throttle cross-section (64) comprises a larger cone angle than in a Laval nozzle;
d) a filter drier (48) for the liquid phase is disposed in the collector (10) in front of the outlet (46) thereof in the direction of flow.

2. A device according to claim 1, characterised in that the ejector (20) is of two-part construction wherein one part (74) forms its nozzle and the second part (76) is a deformed pipe section forming the mixing chamber (68) and the (second) diffuser (72).

3. A device according to claim 2, characterised in that the part (74) containing the nozzle is a finish-machined turned part or casting.

4. A device according to claim 1 or 2, wherein a plurality of refrigeration cycle paths (4a) is provided in the evaporator (4), characterised in that an inlet collector (54) is provided for the evaporator (4), which inlet collector is connected to and communicates with the refrigeration cycle paths (4a) via throttle apertures (80).

5. A device according to claim 4, characterised in that the throttle apertures (80) are constructed as bores in the wall of the inlet collector (54).

6. A device according to any one of claims 1 to 5, characterised in that the connecting line between the outlet for the gaseous phase of the collector and the inlet of the compressor on the one hand, and the connecting line between the outlet of the liquefier and the high-pressure inlet of the ejector (20) exchange heat via a heat exchanger device.

7. A device according to claim 6, characterised in that the ejector (20) is disposed inside the receiver space for the gaseous phase of the refrigerant in the collector, the outlet of the ejector (20) at the same time serves directly as an associated inlet (26) into the collecting space, and the ejector is surrounded, exchanging heat with the gaseous phase of the refrigerant, by a section of the connecting line (42) running between the liquefier (8) and the high-pressure inlet (44) of the ejector, wherein, in addition to the outlets (48, 46), inlets (84, 86) for the connections of the evaporator outlet (56) to the low-pressure inlet (60) of the ejector (20) and of the high-pressure inlet (44) of the ejector to the outlet (40) of the liquefier are constructed in the collector wall.

## Revendications

1. Dispositif pour la climatisation de l'habitacle de véhicules motorisés, comportant un circuit de réfrigérant qui est constitué d'une partie basse pression et d'une partie haute pression, dans le cas duquel un réfrigérant, sortant d'un évaporateur (4) en phase vapeur et passant par un collecteur (10) qui agit comme séparateur de phase entre la phase liquide et la phase gazeuse, est extrait par un compresseur (6), par une sortie (28) pour la phase gazeuse et est amené, avec élévation de la pression, à un condenseur (8) pour refroidissement et condensation et dans le cas duquel du réfrigérant sortant du condenseur (8) en phase liquide peut être renvoyé dans l'évaporateur (4), en passant par un élément d'étranglement (20), avec diminution de pression et refroidissement,
caractérisé par la combinaison de caractéristiques suivantes:
a) l'élément d'étranglement est conçu en tant qu'éjecteur (20) dont l'entrée haute pression (4) est reliée à la sortie (40) du condenseur (8) et dont l'entrée basse pression (30) est reliée à la sortie (56) de l'évaporateur (4);
b) la sortie (24) de l'éjecteur (20) est reliée à l'entrée (26) du collecteur (10) ou forme ce collecteur, le collecteur (10) étant muni, pour la phase liquide, d'une sortie (46) qui est reliée à l'entrée (54) de l'évaporateur (4);
c) pour le passage, en phase unique, du réfrigérant, de l'entrée haute pression (44) de l'éjecteur (20) jusqu'à la section d'étranglement (64) de la buse, celle-ci est conçue en tant que buse de Laval, tandis que pour les conditions de passage du réfrigérant entre l'entrée haute pression (44) de l'éjecteur (20) et la section d'étranglement (64) de la buse, dans lesquelles, en avant de la section d'étranglement (64) dans le sens de l'écoulement (22), une partie du réfrigérant se convertit déjà en la phase gazeuse, l'angle de sortie de la buse derrière la section d'étranglement (64) possède un angle d'ouverture plus grand que dans le cas d'une buse de Laval;
d) dans le collecteur (10), en avant, dans le sens de l'écoulement, de sa sortie (46) pour la phase liquide est disposé un sécheur filtrant (48).

2. Dispositif selon la revendication 1, caractérisé par le fait que l'éjecteur (20) est conçu en deux parties, la première partie (74) formant sa buse et la seconde partie (76) étant un morceau de tube mis en forme, avec formation de la chambre de mélange (68) et du (second) diffuseur ((72).

3. Dispositif selon la revendication 2, caractérisé par le fait que la partie (74) contenant la buse est une pièce tournée ou une pièce de fonte ayant subi une reprise d'usinage.

4. Dispositif selon la revendication 1 ou 2, dans le cas duquel sont prévues plusieurs voies (4a) de l'évaporateur (4) pour le recyclage du réfrigérant, caractérisé par le fait qu'est prévu pour l'évaporateur (4) un collecteur d'entrée (54) qui, par l'intermédiaire de diaphragmes d'étranglement (80), est relié en communication avec les voies (4a) prévues pour le recyclage du réfrigérant.

5. Dispositif selon la revendication 4, caractérisé par le fait que les diaphragmes d'étranglement (80) sont conçus sous forme de perçages de la paroi du collecteur d'entrée (54).

6. Dispositif selon l'une des revendications 1 à 5, caractérisé par le fait que la conduite de liaison entre la sortie pour la phase gazeuse du collecteur et l'entrée du compresseur d'une part et la conduite de liaison entre la sortie du condenseur et l'entrée haute pression de l'éjecteur (20) sont en situation d'échanger de la chaleur par l'intermédiaire d'un dispositif échangeur de chaleur.

7. Dispositif selon la revendication 6, caractérisé par le fait que l'éjecteur (20) est disposé dans le collecteur à l'intérieur de l'espace de réception pour la phase gazeuse du réfrigérant, que la sortie de l'éjecteur (20) y sert directement d'entrée correspondante (26) dans l'espace de collecte et que l'éjecteur est entouré par une portion de la conduite de liaison (42) qui relie le condenseur (8) et l'entrée haute pression (44) de l'éjecteur, avec échange de chaleur avec la phase gazeuse du réfrigérant, dispositif dans lequel, dans la paroi du collecteur, en plus des sorties (48, 46) sont conçues des entrées (84, 86) pour les raccordements de la sortie (56) de l'évaporateur à l'entrée basse pression (60) de l'éjecteur et de l'entrée haute pression (44) de l'éjecteur à la sortie (40) du condenseur.
